# EUROPEAN PATENT APPLICATION

(11) **EP 2 040 421 A1**
(43) Date of publication of application: **25.03.2009**
(21) Application number: 07116757.1
(22) Date of filing: 19.09.2007
(51) Int. Cl.: H04L 12/56, H04W 4/00

(54) **Methods, apparatuses, system and related computer program product for large capacity data stream handovers**

(71) Applicant: Nokia Siemens Networks Oy, 02610 Espoo (FI)
(72) Inventor: Li, Zexian, 02760 Espoo (FI); Pandey, Ravi, 02430 Masala (FI); Pichna, Roman, 02620 Espoo (FI)
(74) Representative: TBK-Patent

(57) **Abstract**

It is disclosed a method comprising signalling information related to an intended handover of a large capacity data stream, the information comprising an available communication resource capacity of at least one network entity; and a method comprising receiving the information, designating one or more of the at least one network entity as a handover target based on the received available communication resource capacity, and allocating one or more communication resources in the designated one or more network entities based on the received available communication resource capacity.

## Description

### FIELD OF THE INVENTION

The present invention relates to large capacity data stream (a so-called "thick pipe") handovers. More specifically, the present invention relates to methods, apparatuses, a system and a related computer program product e.g. related to mobile WiMAX (Worldwide Interoperability for Microwave Access).

### BACKGROUND

Mobile WiMAX has been designed for mobile broadband data access for individual terminals or MSs (mobile stations) consuming a data rate significantly smaller than a data capacity of any BS (base station) or sectors. Mobile WiMAX can also be used for providing mobile platforms with PWLAN (public WLAN (wireless local area network)) or so-called femto BSs (such as found e.g. in busses, train carriages or boats) aggregating, e.g., BE (Best Effort) network traffic from many users. Similarly, e.g. TV (television) signal provision or video streaming with high rate data streams are demanding lots of capacity from a target BS. In the following, such a large (or huge/big) data stream is occasionally named "Thick Pipe".

As a use case example, e.g. a train operator providing free WLAN access for travelers could be conceived. A mobile base network (so-called "backbone") for signal provision to and from the train is provided e.g. by mobile WiMAX. A WLAN coverage within the train may be achieved using a combination of WLAN, NAPT (network address port translation) and a WiMAX gateway. This WiMAX gateway aggregates network data traffic e.g. from entertainment and business travelers into a thick pipe.

According to the above, given the capacity of the thick pipe and the speed of the train, a problem resides in that the handover procedure becomes a significant challenge for radio network management, since a handover capacity margin has to be kept considerable in the affected areas.

As mentioned above, mobile WiMAX has been designed for mobile broadband data access for individual terminals consuming data rate much smaller than the data capacity of the BS or sectors. Therefore, if e.g. an individual terminal consumes a significant data rate (such as video streaming) or individual user streams are aggregated by (e.g. WLAN / WiMAX) gateways, another problem resides in that the resulting data rate per WiMAX MS (mobile station) can become significant and/or even comparable to the remaining capacity of the BS or sector.

Approaches have been conceived, in which, if a thick pipe handover to a target BS is to be performed and the target BS cannot accommodate such a request, the target BS has two possible choices to reply:
1. Reject the handover request; and
2. Accept the request, but indicate that the target BS may not serve the thick pipe to full extent.

In consideration of the above, it is an object of the present invention to overcome one or more of the above drawbacks. In particular, the present invention provides methods, apparatuses, a system and a related computer program product for large capacity data stream handovers.

According to the present invention, in a first aspect, this object is for example achieved by **a method** comprising:
signalling information related to an intended handover of a large capacity data stream, the information comprising an available communication resource capacity of at least one network entity.

According to the present invention, in a second aspect, this object is for example achieved by **a method** comprising:
receiving information related to an intended handover of a large capacity data stream, the information comprising an available communication resource capacity of at least one network entity;
designating one or more of the at least one network entity as a handover target based on the received available communication resource capacity; and
allocating one or more communication resources in the designated one or more network entities based on the received available communication resource capacity.

According to further refinements of the invention as defined under the above first and second aspects,
- the information is comprised in a handover response;
- the available communication resource capacity is collected from handover statistics over a given area;
- the available communication resource capacity is collected from a pre-configured handover pattern;
- the pre-configured handover pattern is pre-configured according to communication needs arising along at least one of a train track, a highway and a scenic drive;
- the information comprises at least two bits reserved for dimensioning of the available communication resource capacity;
- the available communication resource capacity is expressed as one of an absolute value of data rate and a relational value indicative of a relation between a nominal communication resource capacity and the available communication resource capacity;
- the large capacity data stream comprises at least one service flow;
- the designating is performed further based on a, e.g., received signal strength indication;
- the designating designates at least one of a pre-configured network entity, a new network entity different from the pre-configured network entity, and a subset of network entities;
- the method further comprises instructing handover of network traffic unrelated to the large capacity data stream to network entities different from the designated one or more network entities;
- the method further comprises temporarily not admitting network traffic unrelated to the large capacity data stream larger than best effort network traffic;
- the allocating comprises aggregating the information from the designated one or more network entities and sending the aggregated information;
- the method further comprises detecting a movement of a handover source of the large capacity data stream in at least one of space and time, and the designating and the allocating are performed further based on the detected movement of the handover source of the large capacity data stream;
- the method further comprises predicting a path of the handover source of the large capacity data stream based on the detected movement of the source of the large capacity data stream;
- the method further comprises notifying the one or more designated network entities on the predicted movement of the handover source of the large capacity data stream.

According to the present invention, in a third aspect, this object is for example achieved by **an apparatus** comprising:
means for signalling information related to an intended handover of a large capacity data stream, the information comprising an available communication resource capacity of one or more network entities.

According to the present invention, in a fourth aspect, this object is for example achieved by **an apparatus** comprising:
means for receiving information related to an intended handover of a large capacity data stream, the information comprising an available communication resource capacity of at least one network entity;
means for designating one or more of the at least one network entity as a handover target based on the available communication resource capacity received by the means for receiving; and
means for allocating one or more communication resources in the one or more network entities designated by the means for designating based on the available communication resource capacity received by the means for receiving.

According to further refinements of the invention as defined under the above third and fourth aspects,
- the information is comprised in a handover response;
- the available communication resource capacity is collected from handover statistics over a given area;
- the available communication resource capacity is collected from a pre-configured handover pattern;
- the pre-configured handover pattern is pre-configured according to communication needs arising along at least one of a train track, a highway and a scenic drive;
- the information comprises at least two bits reserved for dimensioning of the available communication resource capacity;
- the available communication resource capacity is expressed as one of an absolute value of data rate and a relational value indicative of a relation between a nominal communication resource capacity and the available communication resource capacity;
- the large capacity data stream comprises at least one service flow;
- the means for designating is configured to designate further based on a, e.g., received signal strength indication;
- the means for designating is configured to designate at least one of a pre-configured network entity, a new network entity different from the pre-configured network entity, and a subset of network entities;
- the apparatus further comprises means for instructing handover of network traffic unrelated to the large capacity data stream to network entities different from the one or more network entities designated by the means for designating;
- the apparatus further comprises means for admitting network traffic configured to temporarily not admit network traffic unrelated to the large capacity data stream larger than best effort network traffic;
- the means for allocating comprises means for aggregating the information from the designated one or more network entities and means for sending the aggregated information;
- the apparatus further comprises means for detecting a movement of a handover source of the large capacity data stream in at least one of space and time, and the means for designating and the means for allocating are configured to operate further based the movement of the handover source of the large capacity data stream detected by the means for detecting;
- the apparatus further comprises means for predicting a path of the handover source of the large capacity data stream based on the movement of the handover source of the large capacity data stream detected by the means for detecting;
- the apparatus further comprises means for notifying the one or more network entities designated by the means for designating on the movement of the handover source of the large capacity data stream predicted by the means for predicting;
- the handover source is constituted by a mobile station;
- the apparatus is based on mobile worldwide interoperability for microwave access;
- the apparatus according to the third aspect is a handover target base station;
- the apparatus according to the fourth aspect is one of a serving base station serving a mobile station and at least one access service network gateway;
- the apparatus is implemented as a chipset or module.

According to the present invention, in a fifth aspect, this object is for example achieved by **a system** comprising:
a mobile station,
an apparatus according to the third aspect; and
an apparatus according to the fourth aspect.

According to the present invention, in a sixth aspect, this object is for example achieved by **a computer program product** comprising code means for performing methods steps of a method according to any one of the first and second aspects, when run on a computer.

In this connection, it has to be pointed out that the present invention enables one or more of the following:
- An Extension to network-internal handover signalling and RRM (radio resource management) for improving efficiency of the overall system in the case of a thick pipe handover.
- Insensitivity to the fact that when the thick pipe is comparable to the currently available capacity of the target BS(s), most target BS(s) will reply with an indication that the target BS(s) may not serve the thick pipe to full extent.
- Enabling an informed choice which (target) BS(s) is (are) to be designated based on the information about the available resources per (target) BS.
- Finer granularity when making the choice which (target) BS(s) is (are) to be designated.
- Predictive thick pipe reservation for proactive accommodation of thick pipe resource requirements e.g. along a predicted time and/or space path of the mobile station.

### BRIEF DESCRIPTION OF THE DRAWINGS

An embodiment of the present invention is described herein below with reference to the accompanying drawings, in which:

Fig. 1 shows a method for large capacity data stream handover according to an embodiment of the present invention;

Fig. 2 shows a method for large capacity data stream handover according to a modification of the embodiment of the present invention; and

Fig. 3 shows respective apparatuses (e.g. Serving BS, ASN-GW(s) (access service network gateway(s)) and (target) BS(s)) for large capacity data stream handover according to the embodiment of the present invention and the modification of the embodiment of the present invention.

### DETAILED DESCRIPTION OF AN EMBODIMENT OF THE PRESENT INVENTION

An embodiment of the present invention is described herein below by way of example with reference to the accompanying drawings.

The embodiment may be summarized according to the following, without being restricted thereto:
- Augmenting ASN internal handover signalling with information on available capacity for a particular handover target if subject is the thick pipe and its QoS requirements can not be fully accommodated. (e.g. Extension to R4/R6 signalling)
- The process of ordering and selecting target BS by the network (located in BS or ASN GW) for handover reply for best match considering the information signaled in augmented handover signaling.
- Predictive thick pipe reservation procedure.

It is to be noted that for this description, the terms "thick pipe, handover response, base station and target base station" are examples for "large capacity data stream, information related to an intended handover of a large capacity data stream, network entity and handover target", without restricting the latter-named terms to the special technical or implementation details imposed to the first-named terms.

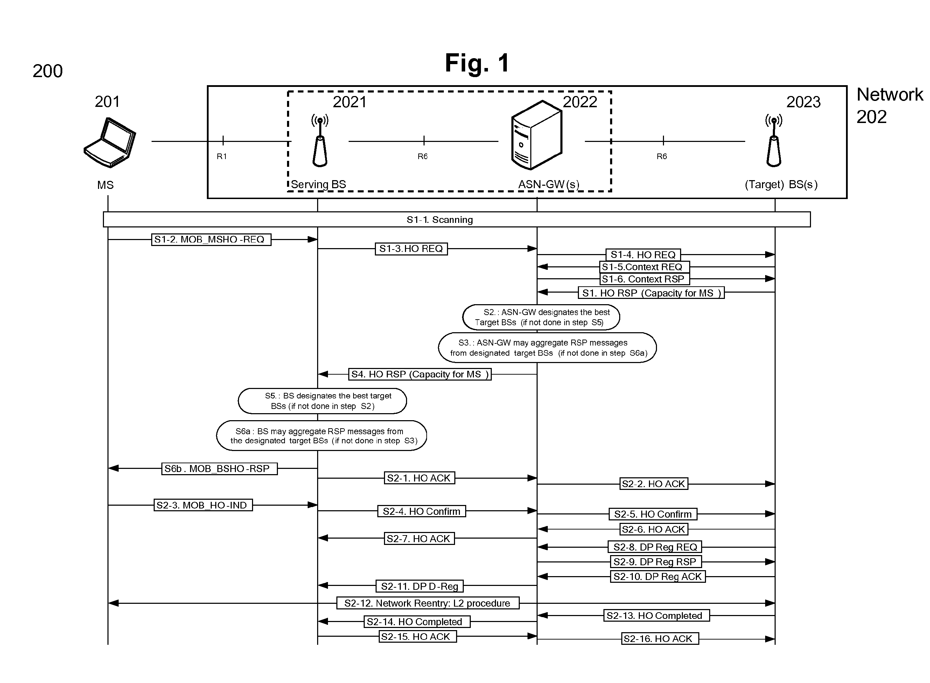

Fig. 1 shows a method according to the present invention as an example of MS initiated handover with extensions for thick pipe handover. Signalling between elements is indicated in horizontal direction, while time aspects between signalling may be reflected in the vertical arrangement of the signalling sequence as well as in the sequence numbers. It is to be noted that the time aspects indicated in Fig. 1 do not necessarily restrict any one of the method steps shown to the step sequence outlined. This applies in particular to method steps that are functionally disjunctive with each other, for example, a DP (Data Path) setup shown e.g. in steps S2-8 to S2-10 may be as well performed simultaneously or substantially simultaneously e.g. with the HO preparation phase shown in steps S1-2 to S1-3.

As shown in Fig. 1, a communication system 200 may comprise a MS 201 and a network 202. The network 202 in turn may comprise a serving BS 2021, at least one ASN-GW 2022 (abbreviated as ASN-GW(s) hereinafter) and one or more BSs 2023 (abbreviated as BS(s) hereinafter). The serving BS 2021 and the ASN-GW(s) 2022 may also be disposed as an integral entity, as indicated by the dashed box surrounding the functional blocks of the serving BS 2021/ASN-GW(s) 2022.

As optional preparatory measures, in step S1-1, the entire communication system 200 may perform scanning for resources available throughout the system. In step S1-2, e.g. the MS 201 may perform sending a mobility MS handover request (MOB_MSHO-REQ) to the serving BS 2021. In steps S1-3 and S1-4, e.g. the serving BS 2021 may perform sending a handover request (HO REQ) to the BS(s) 2023 e.g. via the ASN-GW(s) 2022. In steps S1-5 and S1-6, the BS(s) 2023 and the ASN-GW(s) 2022 may establish a context through a context request (Context REQ) and a subsequent context response (Context RSP).

Then, in step S1, e.g. the BS(s) 2023 may perform signalling information (e.g. by sending a HO RSP) related to an intended handover of a large capacity data stream (occasionally abbreviated "LCDS" hereinafter), the information comprising an available communication resource capacity of at least one network entity (e.g. BS(s) 2023).

Also in step S1, e.g. the ASN-GW(s) 2022 may perform receiving the information (e.g. the HO RSP) related to the intended handover of the large capacity data stream (e.g. the so-called thick pipe), the information comprising the available communication resource capacity of at least one network entity (e.g. BS(s) 2023).

Then, in step S2, e.g. the ASN-GW(s) 2022 may perform designating one or more of the at least one network entity (e.g. BS(s) 2023) as a handover target (occasionally referred to as "T_BS(s)" herein after) based on the received available communication resource capacity.

It is to be noted that the same functionality as performed in step S2 in the ASN-GW(s) 2022 may alternatively be performed in step S5 in the serving BS 2021.

In steps S3 and S6a, e.g. the ASN-GW(s) 2022 or BS 2021 may perform allocating one or more communication resources in the designated one or more network entities based on the received available communication resource capacity. In that case, the ASN-GW(s) 2022 may perform an optional step S4 for sending aggregated information (to be described herein below) to the serving BS 2021. In turn, in step S6b, the ASN-GW(s) 2022 may perform, via the serving BS 2021, sending of the aggregated information e.g. to the MS 201 (e.g. in form of a mobility BS handover response).

It is to be noted that the same functionality as performed in steps S2 and/or S3 in the ASN-GW(s) 2022 may alternatively be performed in steps S5 and/or S6a in the serving BS 2021. In that case, the ASN-GW(s) 2022 may perform simple relaying of the information (e.g. HO RSPs) from the BS(s) 2023 to the serving BS 2021 e.g. in a non-aggregated form.

According to further developments of the method according to the present invention, the information may be comprised in the handover response (HO RSP).

In addition, as a preparatory measure (e.g. in step S1-1 described above), the available communication resource capacity may be collected from handover statistics over a given area, or may alternatively be collected from a pre-configured handover pattern. In the latter case, the pre-configured handover pattern may be pre-configured according to communication needs arising along a train track, a highway and/or a scenic drive.

Furthermore, the information may comprise at least two bits reserved for dimensioning the available communication resource capacity. In that case, the available communication resource capacity may be expressed as an absolute value of a data rate (e.g. in units of Mbps or similar units) or alternatively as a relational value (relative number using %) which indicates a relation between a nominal communication resource capacity (e.g. total bandwidth/data rate of the BS(s) 2023) and the available communication resource capacity (e.g. bandwidth/data rate currently available in the BS(s) 2023).

Moreover, the large capacity data stream ("thick pipe") may comprise at least one service flow (depending e.g. on a user and/or an application requiring service(s) via the LCDS).

According to further developments of the ASN-GW(s) 2022 and/or Serving BS 2021, the designating may be performed further based on a received signal strength indication (RSSI). In addition, the designating may designate a pre-configured network entity (such as a pre-set or previously known BS), a new network entity different from the pre-configured network entity (e.g. because the new BS has higher available capacity than the pre-set BS), or a subset of network entities (e.g. because several BSs have the same or substantially the same available capacity). Moreover, the ASN-GW(s) 2022 and/or Serving BS 2021 may further comprise instructing a handover of network traffic unrelated to the LCDS to network entities different from the designated one or more network entities, and may, alternatively or in addition, further comprise a temporary non-admission of network traffic unrelated to the LCDS larger than e.g. best effort network traffic.

Furthermore, the allocating performed by the ASN-GW(s) 2022 and/or serving BS 2021 may be comprised of aggregating (see steps S2 or S5) the information (e.g. HO RSPs from several BS(s)) from the designated one or more network entities (e.g. target BS(s)) and sending (see step S6b and step S4) the aggregated information.

In addition, the ASN-GW(s) 2022 and/or Serving BS 2021 may further comprise detecting a movement of a handover source (e.g. the MS 201) of the LCDS in space and/or time, and the designating as well as the allocating may be performed further based on the detected movement of the handover source of the LCDS. In that case, the ASN-GW(s) 2022 and/or Serving BS 2021 may further perform predicting a path (or trajectory) of the handover source of the LCDS based on the detected movement of the source of the LCDS. In the latter case, notifying the one or more designated network entities (e.g. target BS(s)) on the predicted movement of the handover source of the LCDS may be performed.

For the sake of completeness, the above described preparations for the handover procedure according to the present invention may be completed in steps S2-1 to S2-16. In short, in steps S2-1 and S2-2, a handover acknowledgement (HO ACK) may be sent from the serving BS 2021 to the designated target BS(s) 2023 e.g. via the ASN-GW(s) 2022. In step S2-3, a mobility handover indication (MOB_HO-IND) responsive to the information sent in step S6b may be sent from the MS 201 to the serving BS 2021. Accordingly, in steps S2-4 and S2-5, a handover confirmation (HO Confirm) may be sent from the serving BS 2021 to the designated target BS(s) 2023 via the ASN-GW(s) 2022. Responsive to the latter handover confirmation, in steps S2-6 and S2-7, another handover acknowledgment (HO ACK) may be sent from the designated BS(s) 2023 to the serving BS 2021 via the ASN-GW(s) 2022. Then, in steps S2-8 to S2-11, the designated target BS(s) 2023 and the ASN-GW(s) 2022 may negotiate a DP (Data Path) Registration (see messages DP Reg REQ, DP Reg RSP and DP Reg ACK), and in step S2-11, e.g. ASN-GW 2022 may remove the previous (old) Data Path (DP) to the serving BS 2021 (see message DP D-Reg). In step S2-12, the MS 201 and the designated target BS(s) 2023 may perform network reentry e.g. by means of a L2 (layer 2) procedure. Finally, in steps S2-13 to S2-16, the designated target BS(s) 2023 and the serving BS 2021 may perform final completion of the handover procedure via the ASN-GW(s) 2022 (see messages HO Completed and HO ACK responsive thereto).

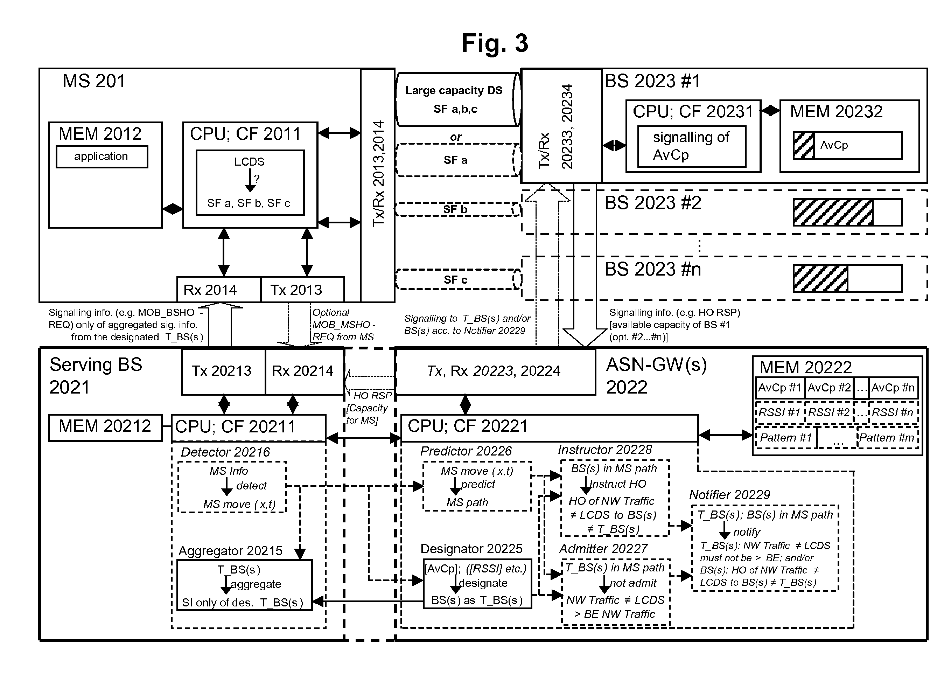

Fig. 3 shows respective apparatuses (e.g. Serving BS 2021, ASN-GW(s) 2022 and BS(s) 2023) for large capacity data stream handover according to the embodiment of the present invention. Within Fig. 3, for ease of description, means or portions providing main functionalities are depicted with solid functional blocks and a normal font, while means or portions providing optional functions are depicted with dashed functional blocks and an italic font.

The MS 201 may comprise a central processing unit CPU or core functionality CF (referred to as "CPU" hereinafter) 2011, a memory 2012 for holding e.g. an application, a sender (or means for sending) Tx 2013 and a receiver (or means for receiving) Rx 2014. It is to be noted that the MS 201 may also aggregate several service flows (shown as SF a, SF b and SF c) from different users and/or different applications into one large capacity data stream (shown as Large capacity DS) intended for handover e.g. to BS 2023 #1. Alternatively, e.g. only one of the service flows SF a to SF c may be intended for handover to BS 2023 #1 to #3, respectively, based on a decision of the user and/or the application.

The serving BS 2021 may comprise a CPU (or core functionality CF) 20211, a memory 20212, a sender (or means for sending) 20213, a receiver (or means for receiving) 20214, an aggregator (or means for aggregating) 20215 and an optional detector (or means for detecting) 20216. The ASN-GW(s) 2022 may comprise a CPU 20221, a memory 20222, a sender (or means for sending) Tx 20223, a receiver (or means for receiving) Rx 20224, a designator (or means for designating) 20225, an optional predictor (or means for predicting) 20226, an optional admitter (or means for admitting) 20227, an optional instructor (or means for instructing) 20228 and an optional notifier (or means for notifying) 20229. As indicated by the dashed extensions of the functional blocks of the CPUs 20211 and 20221, the means for aggregating 20215, the optional means for detecting 20216, the means for designating 20225, the optional means for predicting 20226, the optional means for admitting 20227, the optional means for instructing 20228 and the optional means for notifying 20229 may be functionalities running on the CPUs 20211 and 20221 or may alternatively be separate functional entities or means. Furthermore, all the means 20215, 20216 and 20225 to 20229 are interchangeably disposable between the serving BS 2021 and the ASN-GW(s) 2022, no matter whether the serving BS 2021 and the ASN-GW(s) 2022 are disposed as separate entities or as a single/combined entity.

Furthermore, each of the BS(s) 2023 #1 to #n may comprise a CPU 20231, a memory 20232, a sender (or means for sending) Tx 20233 and a receiver (or means for receiving) Rx 20234, wherein only the full configuration for BS 2023 #1 is shown in Fig. 3 for simplification of illustration.

The CPUs 20x1 (wherein x = 1, 21, 22, and 23) may respectively be configured to process various data inputs and to control the functions of the memories 20x2, the senders 202x3 and the receivers 20x4 (and the aggregator 20215 and the detector 20216 of the serving BS 2021 as well as the designator 20225, the predictor 20226, the admitter 20227, the instructor 20228 and the notifier 20229 of the ASN-GW(s) 2022). The memories 20x2 may respectively serve e.g. for storing code means for carrying out e.g. the respective method according to the invention, when run on the CPUs 20x1. It is to be noted that the (optional) senders 20x3 and the (optional) receivers 20x4 may alternatively be provided as respective integral transceivers (as shown e.g. in the transceivers 20223, 20224 of the ASN-GW(s) 2022 or the transceiver 20233, 20234 of the BS 2023 #1). In turn, those transceivers may also be disposed as separate senders and receivers. It is further to be noted that the senders/receivers may be implemented i) as physical senders/receivers for transceiving e.g. via the air interface (e.g. in case of the MS 201 or BS (s) 2023), or ii) as routing entities e.g. for sending/receiving data packets e.g. in a PS (packet switched) network (e.g. between serving BS 2021 and ASN-GW(s) 2022 when disposed as separate network entities), or iii) as functionalities for writing/reading information into/from a given memory area (e.g. in case of shared/common CPUs or memories e.g. of serving BS 2021 and ASN-GW(s) 2022 when disposed as an integral network entity), or iv) as any suitable combination of i) to iii).

Furthermore, as indicated by the dashed connections between the functional blocks of the serving BS 2021 and ASN-GW(s) 2022, it is to be noted that the serving BS 2021 and ASN-GW(s) 2022 may also be implemented as an integral/combined entity, as mentioned above. In that case, the CPUs 20211, 20221, the memories 20212, 20222, the (optional) senders 20213, 20223 and the (optional) receivers 20234, 20244 may respectively be common and/or shared resources.

For example, e.g. the memories 20232 in conjunction with the CPUs 20231 and the senders 20233 of the BS(s) 20231 #1 to #n may constitute means for signalling information (such as a HO RSPs) related to an intended handover of a large capacity data stream (LCDS), the information comprising an available communication resource capacity of one or more network entities (such as the BS(s) 2023 #1 to #n). For the ease of description, each functional block of the BS (s) 2023 #1 to #n has an indication of available capacity (abbreviated "AvCp") in the plain portion on its right-hand side, while the portion being hatched from bottom left to upper right indicates the occupied capacity of each BS 2023 #1 to #n.

Then, e.g. the receiver 20224 of the ASN-GW(s) 2022 may be configured to receive the signaled information (such as HO RSP) related to the intended handover of the LCDS, the information comprising the available communication resource capacity of the at least one network entity (such as BS(s) 2023 #1 to #n).

For example, e.g. the means for designating 20225 in conjunction with the CPU 20221 and the memory 20222 may be configured to designate one or more (e.g. BS 2023 #1) of the at least one network entity (e.g. BS 2023 #1 to #n) as a handover target based on the available communication resource capacity received by the means for receiving 20224.

And, e.g. the aggregator 20215 and the sender 20213 of the serving BS 2021 may constitute means for allocating one or more communication resources (such as bandwidth and/or data rate) in the one or more network entities (e.g. BS 2023 #1) designated by the means for designating 20225 based on the available communication resource capacity received by the means for receiving 20224.

According to further developments of the apparatus according to the present invention, the information may be comprised in the handover response (HO RSP).

In addition, as a preparatory measure, e.g. the receiver 20224, the CPU 20221 and the memory 20222 of the ASN-GW(s) 2022 may be configured to collect available communication resource capacity from handover statistics over a given area, or alternatively from a pre-configured handover pattern. In the latter case, the pre-configured handover pattern may be pre-configured according to communication needs arising along a train track, a highway and/or a scenic drive. These pre-configured handover patterns may also be stored and/or held in the memory 20222 (indicated by pattern #1 to #m).

Furthermore, the information may comprise at least two bits reserved for dimensioning of the available communication resource capacity. In that case, the available communication resource capacity may be expressed as an absolute value of a data rate (e.g. in units of Mbps or similar units) or alternatively as a relational value (relative number using %) which indicates a relation between a nominal communication resource capacity (e.g. total bandwidth/data rate of the BS(s) 2023) and the available communication resource capacity (e.g. bandwidth/data rate currently available in the BS(s) 2023). As an example, BS 2023 #1 is shown to have about 80% of available capacity, BS 2023 #2 about 30%, and BS 2023 #n about 50%.

Moreover, the large capacity data stream ("thick pipe") may comprise at least one service flow (depending e.g. on a user and/or an application requiring service(s) via the LCDS). As an example shown in Fig. 3, the LCDS may be handed over to the BS 2023 #1 having the most available capacity. As an alternative, in case the entire LCDS cannot be accommodated by either ones of BS 2023 #1 to #n, e.g. the user of the MS 201 or the application may decide that at least the most important one of service flows SF a to SF c is accommodated by any one of BS 2023 #1 to #n.

According to further developments of the ASN-GW(s) 2022 and/or Serving BS 2021, the means for designating 20225 may further be configured to designate based on a received signal strength indication (RSSI). In that case, e.g. the memory 20222 may be configured to store and/or hold the received RSSI values (depicted as RSSI #1 to RSSI #n in the functional block of memory 20222 in Fig. 3). In addition, the means for designating 20225 may be configured to designate a pre-configured network entity (such as a pre-set or previously known BS), a new network entity different from the pre-configured network entity (e.g. because the new BS has higher available capacity than the pre-set BS), or a subset of network entities (e.g. because several BSs have the same or substantially the same available capacity). Moreover, the ASN-GW(s) 2022 and/or Serving BS 2021 may further comprise the means for instructing 20228 of a handover of network traffic unrelated to the LCDS to network entities different from the designated one or more network entities, and may, alternatively or in addition, further comprise the means for admitting 20227 configured to perform a temporary non-admission of network traffic unrelated to the LCDS larger than e.g. best effort network traffic.

Furthermore, the means for allocating 20215, 20213 of the ASN-GW(s) 2022 and/or Serving BS 2021 may be comprised of the means for aggregating 20215 the information (e.g. HO RSPs from several BS(s)) from the designated one or more network entities (e.g. target BS(s)) and the means for sending 20213 (see step S6b and e.g. step S4) the aggregated information.

In addition, the ASN-GW(s) 2022 and/or Serving BS 2021 may further comprise the means for detecting 20216 of a movement of a handover source (e.g. the MS 201) of the LCDS in space and/or time, and the means for designating 20225 as well as the means for allocating 20215, 20213 may be configured to operate further based on the movement of the handover source of the LCDS detected by the means for detecting 20216. In that case, the ASN-GW(s) 2022 and/or Serving BS 2021 may further comprise the means for predicting 20226 configured to predict a path (or trajectory) of the handover source of the LCDS based on the movement of the source of the LCDS detected by the means for detecting 20216. In the latter case, the serving BS 2021 and/or the ASN-GW(s) 2022 may further comprise the means for notifying 20229 the one or more network entities (e.g. target BS(s)) designated by the means for designating 20225 on the movement of the handover source of the LCDS predicted by the means for predicting 20226.

Without being restricted to the details following in this section, the embodiment of the present invention may be summarized as follows:

### Handover Procedure Outline

1. MS requests HO (also applicable to NW-initiated HO), and fails in target BSs, because not enough resources are available. Target BS signals what resources it is willing to accept (proprietary feature in R6/R4 signalling). This allows the BS or ASN-GW to select a subset (1 or more) best BSs for HO). Note: it is most likely most Target-BSs will reply that they cannot support all of the QoS.
   ■ Example of indication: Available capacity can be signaled in Mbps units (UL and DL) or as a relative number using %.
2. The selection criteria may be based on RSSI, but also taking into account the available resources in the target BSs. Result of the process is the new order of target BSs, a subset of target BSs or one selected BS.
3. HO is executed.
4. Some SFs will get nominal QoS at Target BS, but actual allocated resources will be reduced to some level.
5. Some SFs will not be accepted in DSA signalling exchange during HO. However, only a user or an application can evaluate which flows are most important to survive. For the Thick Pipe case, the service flows are to be preserved at least with a reduced actual resource allocation but are to be kept at least at the nominal values, as explained in the previous step.

### Handover Procedure Outline

Predictive thick pipe reservation - proactive accommodation of thick pipe resource requirements along the predicted time/space trajectory:
1. ASN-GW (or group of them) collect HO statistics over certain area
   - Alternatively, expected HO patterns can be pre-configured, e.g., along train tracks, highway, scenic drives, etc.
2. ASN-GW(s) detect thick pipe presence
3. ASN-GW(s) detect thick pipe movement/HO(s)
4. ASN-GW(s) match thick pipe movement to an existing pattern
5. ASN-GW(s) predict movement of the thick pipe in space and time.
6. ASN GW(s) may notify BSs the approaching of thick pipe and the capacity needed for the thick pipe
7. ASN-GW and/or BS (or a group of them) makes capacity for thick pipe available along the predicted path (in space and time) by, e.g.,
   - Moving MSs to other BSs to free the capacity in the thick pipe target BSs.
   - Temporarily not admitting larger flows other than BE (best effort)

### [MODIFICATION OF THE EMBODIMENT]

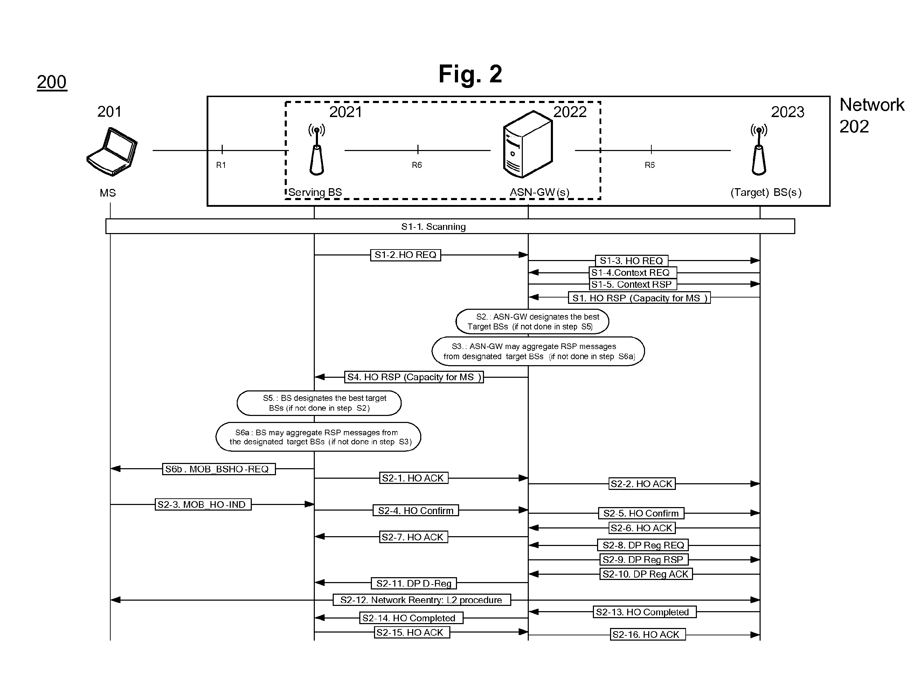

Alternatively, as shown in Fig. 2, the configuration as described in conjunction with the above embodiment may be adapted for NW initiated handover with extensions for thick pipe handover. Here, only step S1-2 according to Fig. 1 is omitted, so that e.g. the serving BS 2021 may initiate the handover procedure. Consequently, steps S1-2 to S1-5 according to Fig. 2 respectively correspond to steps S1-3 to S1-6 according to Fig. 1, and step S6b may be carried out by using a request message.

Accordingly, steps S1 to S6a and S2-1 to S2-16 according to Fig. 2 correspond to the same steps S1 to S6b and S2-1 to S2-16 according to Fig. 1.

Within Fig. 3, the sender 2013 of the MS 201 may be configured to send an optional mobility MS handover request (MOB_MSHO-REQ) e.g. to the receiver 20214 of the serving BS 2021.

In addition, the serving BS 2021, the ASN-GW(s) 2022 and the BS(s) 2023 may be implemented as a chipset or module.

Finally, the present invention also relates to a system which may comprise the MS 201, the Serving BS 2021, the ASN-GW(s) 2022 and the (target) BS(s) 2023 as defined herein above.

### [Further embodiments]

For the purpose of the present invention as described herein above, it should be noted that
- an access technology may be any technology by means of which a mobile station can access an access network (or serving base station, respectively). Although WiMAX is used as an exemplary access technology, any present or future technology, such as WLAN (Wireless Local Access Network), BlueTooth, Infrared, and the like may be used; although the above technologies are mostly wireless access technologies, e.g. in different radio spectra, access technology in the sense of the present invention may also imply wirebound technologies, e.g. IP based access technologies like cable networks or fixed line.
- a network may be any device, unit or means by which a mobile station or other user equipment may connect to and/or utilize services offered by the network; such services include, among others, data and/or (audio-) visual communication, video streaming, TV signal provision, data download etc.;
- generally, the present invention may be applicable in those network/user equipment environments relying on a data packet based transmission scheme according to which data are transmitted in data packets and which are, for example, based on the Internet Protocol IP. The present invention is, however, not limited thereto, and any other present or future IP or mobile IP (MIP) version, or, more generally, a protocol following similar principles as (M)IPv4/6, is also applicable;
- a mobile station may be any device, unit or means by which a system user may experience services from an access network;
- method steps likely to be implemented as software code portions and being run using a processor at the network element, are software code independent and can be specified using any known or future developed programming language as long as the functionality defined by the method steps is preserved;
- generally, any method step is suitable to be implemented as software or by hardware without changing the idea of the present invention in terms of the functionality implemented;
- method steps and/or devices, units or means likely to be implemented as hardware components at the serving BS, the ASN-GW(s) and the BS(s), or any module(s) thereof, are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components; in addition, any method steps and/or devices, units or means likely to be implemented as software components may alternatively be based on any security architecture capable e.g. of authentication, authorization, keying and/or traffic protection;
- devices, units or means (e.g. Serving BS, ASN-GW(s) and (target) BS(s)) can be implemented as individual devices, units or means, but this does not exclude that they are implemented in a distributed fashion throughout the system, as long as the functionality of the device, unit or means is preserved.

### LIST OF ABBREVATIONS

- NW: Network
- MS: Mobile Station
- ASN: Access Service Network
- GW: Gateway
- BE: Best Effort
- BS: Base Station
- HO: Hand Over
- O&M: Operation and Maintenance
- (P)WLAN: (Public) Wireless Local Area Network
- WiMAX: Worldwide Interoperability for Microwave Access
- SF: Service Flow
- RRM: Radio Resource Management

## Claims

1. A method, comprising:
signalling information related to an intended handover of a large capacity data stream, the information comprising an available communication resource capacity of at least one network entity.

2. A method, comprising:
receiving information related to an intended handover of a large capacity data stream, the information comprising an available communication resource capacity of at least one network entity;
designating one or more of the at least one network entity as a handover target based on the received available communication resource capacity; and
allocating one or more communication resources in the designated one or more network entities based on the received available communication resource capacity.

3. The method according to claims 1 and 2, wherein the information is comprised in a handover response.

4. The method according to any one of claims 1 to 3, wherein the available communication resource capacity is collected from handover statistics over a given area.

5. The method according to any one of claims 1 to 3, wherein the available communication resource capacity is collected from a pre-configured handover pattern.

6. The method according to claim 5, wherein the pre-configured handover pattern is pre-configured according to communication needs arising along at least one of a train track, a highway and a scenic drive.

7. The method according to any one of claims 1 to 6, wherein the information comprises at least two bits reserved for dimensioning of the available communication resource capacity.

8. The method according to claim 7, wherein the available communication resource capacity is expressed as one of an absolute value of data rate and a relational value indicative of a relation between a nominal communication resource capacity and the available communication resource capacity.

9. The method according to any one of claims 1 to 8, wherein the large capacity data stream comprises at least one service flow.

10. The method according to any one of claims 2 to 9, wherein the designating is performed further based on a, e.g., received signal strength indication.

11. The method according to any one of claims 2 to 10, wherein the designating designates at least one of a pre-configured network entity, a new network entity different from the pre-configured network entity, and a subset of network entities.

12. The method according to any one of claims 2 to 11, further comprising instructing handover of network traffic unrelated to the large capacity data stream to network entities different from the designated one or more network entities.

13. The method according to any one of claims 2 to 12, further comprising temporarily not admitting network traffic unrelated to the large capacity data stream larger than best effort network traffic.

14. The method according to any one of claims 2 to 13, wherein the allocating comprises aggregating the information from the designated one or more network entities and sending the aggregated information.

15. The method according to any one of claims 2 to 14, further comprising detecting a movement of a handover source of the large capacity data stream in at least one of space and time, and wherein the designating and the allocating are performed further based on the detected movement of the handover source of the large capacity data stream.

16. The method according to claim 15, further comprising predicting a path of the handover source of the large capacity data stream based on the detected movement of the source of the large capacity data stream.

17. The method according to claim 16, further comprising notifying the one or more designated network entities on the predicted movement of the handover source of the large capacity data stream.

18. An apparatus, comprising:
means for signalling information related to an intended handover of a large capacity data stream, the information comprising an available communication resource capacity of one or more network entities.

19. An apparatus, comprising:
means for receiving information related to an intended handover of a large capacity data stream, the information comprising an available communication resource capacity of at least one network entity;
means for designating one or more of the at least one network entity as a handover target based on the available communication resource capacity received by the means for receiving; and
means for allocating one or more communication resources in the one or more network entities designated by the means for designating based on the available communication resource capacity received by the means for receiving.

20. The apparatus according to claims 18 and 19, wherein the information is comprised in a handover response.

21. The apparatus according to any one of claims 18 to 20, wherein the available communication resource capacity is collected from handover statistics over a given area.

22. The apparatus according to any one of claims 18 to 21, wherein the available communication resource capacity is collected from a pre-configured handover pattern.

23. The apparatus according to claim 22, wherein the pre-configured handover pattern is pre-configured according to communication needs arising along at least one of a train track, a highway and a scenic drive.

24. The apparatus according to any one of claims 18 to 23, wherein the information comprises at least two bits reserved for dimensioning of the available communication resource capacity.

25. The apparatus according to claim 24, wherein the available communication resource capacity is expressed as one of an absolute value of data rate and a relational value indicative of a relation between a nominal communication resource capacity and the available communication resource capacity.

26. The apparatus according to any one of claims 18 to 25, wherein the large capacity data stream comprises at least one service flow.

27. The apparatus according to any one of claims 19 to 26, wherein the means for designating is configured to designate further based on a, e.g., received signal strength indication.

28. The apparatus according to any one of claims 19 to 27, wherein the means for designating is configured to designate at least one of a pre-configured network entity, a new network entity different from the pre-configured network entity, and a subset of network entities.

29. The apparatus according to any one of claims 19 to 28, further comprising means for instructing handover of network traffic unrelated to the large capacity data stream to network entities different from the one or more network entities designated by the means for designating.

30. The apparatus according to any one of claims 19 to 29, further comprising means for admitting network traffic configured to temporarily not admit network traffic unrelated to the large capacity data stream larger than best effort network traffic.

31. The apparatus according to any one of claims 19 to 30, wherein the means for allocating comprises means for aggregating the information from the designated one or more network entities and means for sending the aggregated information.

32. The apparatus according to any one of claims 19 to 31, further comprising means for detecting a movement of a handover source of the large capacity data stream in at least one of space and time, and wherein the means for designating and the means for allocating are configured to operate further based the movement of the handover source of the large capacity data stream detected by the means for detecting.

33. The apparatus according to claim 32, further comprising means for predicting a path of the handover source of the large capacity data stream based on the movement of the handover source of the large capacity data stream detected by the means for detecting.

34. The apparatus according to claim 33, further comprising means for notifying the one or more network entities designated by the means for designating on the movement of the handover source of the large capacity data stream predicted by the means for predicting.

35. The apparatus according to any one of claims 32 to 34, wherein the handover source is constituted by a mobile station.

36. The apparatus according to any one of claims 18 to 35, wherein the apparatus is based on mobile worldwide interoperability for microwave access.

37. The apparatus according to any one of claims 18, 20 to 26 and 26 when dependent on claim 18, wherein the apparatus is a handover target base station.

38. The apparatus according to any one of claims 19, and 20 to 36 when dependent on claim 19, wherein the apparatus is one of a serving base station serving a mobile station and at least one access service network gateway.

39. The apparatus according to any one of claims 18 to 38, wherein the apparatus is implemented as a chipset or module.

40. A system, comprising:
a mobile station,
an apparatus according to claim 37; and
an apparatus according to claim 38.

41. A computer program product comprising code means for performing methods steps of a method according to any one of the claims 1 to 17, when run on a computer.
